(19) Europäisches Patentamt
European Patent Office
Office européen des brevets

(11) **EP 0 708 455 B2**

(12) **NEUE EUROPÄISCHE PATENTSCHRIFT**

(45) Veröffentlichungstag und Bekanntmachung des Hinweises auf die Entscheidung über den Einspruch:
**14.05.2003 Patentblatt 2003/20**

(45) Hinweis auf die Patenterteilung:
**11.02.1998 Patentblatt 1998/07**

(21) Anmeldenummer: **95116567.9**

(22) Anmeldetag: **20.10.1995**

(51) Int Cl.⁷: $H01B\ 7/29$, $H01B\ 3/46$, $C08K\ 3/22$, $H01B\ 7/42$

(54) **Flammwidrige Zusammensetzung zur Herstellung von elektrischen Kabeln mit Isolations- und/oder Funktionserhalt**

Flame-retardant composition for manufacturing of electrical cables with insulation and/or functioning continuation

Composition ignifuge pour la fabrication de câbles électriques avec isolant et/ou maintien du fonctionnement

(84) Benannte Vertragsstaaten:
**AT BE CH DE ES FR GB GR IT LI LU NL PT SE**

(30) Priorität: **20.10.1994 DE 4437596**

(43) Veröffentlichungstag der Anmeldung:
**24.04.1996 Patentblatt 1996/17**

(73) Patentinhaber: **Dätwyler AG**
**6440 Altdorf (CH)**

(72) Erfinder:
- **Strauss, Jürgen**
**CH-6467 Schattdorf (CH)**
- **Bissig, André**
**CH-6465 Unterschächen (CH)**
- **Briker, Hans**
**CH-6467 Schattdorf (CH)**
- **Kötter, Wilfried**
**CH-6468 Attinghausen (CH)**
- **Walker, Rudolf**
**CH-6463 Bürglen (CH)**
- **Sonderegger, Hans**
**CH-6460 Altdorf (CH)**
- **Bayard, Konstantin**
**CH-6467 Schattdorf (CH)**

(74) Vertreter:
**von Samson-Himmelstjerna, Friedrich R., Dipl.-Phys. et al**
**SAMSON & PARTNER**
**Widenmayerstrasse 5**
**80538 München (DE)**

(56) Entgegenhaltungen:
EP-A- 0 393 959       EP-A- 0 522 562
EP-A- 0 537 013       EP-B- 0 007 090
WO-A-86/03329        WO-A-94/11455
FR-A- 2 450 855       FR-A- 2 451 387
GB-A- 2 190 092       US-A- 4 098 762
US-A- 4 273 691       US-A- 4 331 733
US-A- 4 536 529       US-A- 4 693 937
US-A- 5 091 453       US-A- 5 218 027

- **PATENT ABSTRACTS OF JAPAN vol. 004 no. 182 (C-035) ,16.Dezember 1980 & JP-A-55 120658 (TORAY SILICONE CO LTD) 17.September 1980,**
- **PATENT ABSTRACTS OF JAPAN vol. 018 no. 015 (C-1151) ,12.Januar 1994 & JP-A-05 254912 (SUMITOMO ELECTRIC IND LTD) 5.Oktober 1993,**
- **DATABASE WPI Section Ch, Week 8139 Derwent Publications Ltd., London, GB; Class A85, AN 81-70976D & JP-A-56 102 008 ( DAINICHI NIPPON CABLES) , 15.August 1981**
- **DATABASE WPI Section Ch, Week 7645 Derwent Publications Ltd., London, GB; Class A85, AN 76-84165X & JP-A-51 107 487 ( FUJIKURA CABLE WORKS KK) , 25.September 1976**
- **DATABASE WPI Section Ch, Week 8217 Derwent Publications Ltd., London, GB; Class A26, AN 82-34036E & JP-A-57 047 765 ( DAINICHI NIPPON CABLES) , 18.März 1982**
- **DATABASE WPI Section Ch, Week 7636 Derwent Publications Ltd., London, GB; Class A82, AN 76-67587X & JP-A-51 082 319 ( TORAY SILICONE KK) , 20.Juli 1976**

EP 0 708 455 B2

- DATABASE WPI Section Ch, Week 8217 Derwent Publications Ltd., London, GB; Class A26, AN 82-34037E & JP-A-57 047 766 ( DAINICHI NIPPON CABLES) , 18.März 1982
- DATABASE WPI Section Ch, Week 7813 Derwent Publications Ltd., London, GB; Class A85, AN 78-24284A & JP-A-53 016 758 ( NITTO ELECTRIC IND KK) , 16.Februar 1978
- Derwent Abstract Nr. AN 84-260757 und JP 59-159840A
- Plastics Technology, March 1990, "Flame-Retartant Polyolefins Don't Need Halogen"
- GE Silicons, 1990, "Silicone Fluid Compounding Guide"
- Vinyl and Allied Polymers, Bd. 2, 2. Auflage, 1972, S.76-78; 254
- PVC Technology, 2. Auflage 1966, W.S. Penn, S. 390-391
- Plastics Materials, 5. Auflage, 1988, J.A. Brydson, S.122-123;314-318

**Beschreibung**

Die Erfindung betrifft Zusammensetzungen bzw. Compounds zur Herstellung von Brandsicherheitskabeln mit Isolations- und/oder Funktionserhalt. Die Erfindung betrifft ferner Brandsicherheitskabel mit Isolations- und/oder Funktionserhalt, die unter Verwendung solcher Zusammensetzungen bzw. Compounds hergestellt sind.

Brandsicherheitskabel sind elektrische Kabel, die auch im Brandfall über einen gewissen Zeitraum funktionsfähig sind und deren Aufbau eine Brandfortleitung in Gebäuden über das Kabel verhindert. Insbesondere ist es wichtig, daß wesentliche Stromkreise geschützt werden, um bestimmte elektrische Systeme funktionsfähig zu halten und dadurch die Sicherheit von Personen zu gewährleisten und den Löschmannschaften eine wirksame Brandbekämpfung zu ermöglichen.

Die Eigenschaften, denen Brandsicherheitskabel genügen müssen, sind in vielen Ländern gesetzlich geregelt. Kabel mit sogenanntem Isolationserhalt werden beispielsweise gemäß dem internationalen Standard IEC 331 oder gemäß VDE 0472 Teil 814 unter Flammeinwirkung mit einer Prüftemperatur von etwa 750°C während einer Dauer von 180 Minuten auf Isolationsversagen geprüft. Diese Prüfung entspricht allerdings nicht den Gegebenheiten der Praxis, da die Temperaturprüfung des Kabels allein noch kein Kriterium für die Funktionstüchtigkeit des Kabels im Brandfall darstellt. Entscheidend ist nicht nur die Temperatur, der ein Kabel ausgesetzt ist, sondern vor allem das Zusammenwirken aller Faktoren, die während eines Brandereignisses auftreten.

Dementsprechend erfordern die deutschen Vorschriften nach DIN 4102 Teil 12 eine weitaus härtere Prüfung. Nach dieser Methode erfolgt die Prüfung nicht nur im "Labormaßstab", sondern man prüft ein komplettes Kabelsystem unter annähernd realistischen Bedingungen in einem Prüfstand von mindestens 3 m Länge. Auf diese Weise werden bei diesem Test auch andere Einflußfaktoren wie mechanische Kräfte, die auf das Kabel einwirken, berücksichtigt. Mechanische Beanspruchungen können beispielsweise durch Verformungen oder teilweises Versagen des Tragesystems oder durch die installationstechnisch bedingte Verlegung der Kabel in Bögen und die dadurch bedingten Fixierungen auftreten. Ferner werden auch die Umgebungsbedingungen in die Prüfung einbezogen. So steht die von Ölbrennern beheizte Brandkammer während des Testlaufs unter leichtem Überdruck. Außerdem verändert sich die Zusammensetzung der Ofenatmosphäre bedingt durch das Verbrennen der brennbaren Anteile am Kabel und anderer im Ofen befindlichen Komponenten, beispielsweise von Zinkbeschichtungen der Tragevorrichtung. Bei der Prüfung nach DIN 4102 Teil 12 wird das Kabel gemäß einer sogenannten Einheitstemperaturzeitkurve (ETK; DIN 4102 Teil 2) über eine Zeitdauer von 90 Minuten, während der schließlich eine Temperatur von ungefähr 1000°C erreicht wird, auf die erforderliche Sicherheit hinsichtlich eines etwaigen Kurzschlusses oder einer Unterbrechung des Stromflusses (Leiterunterbruch) überprüft. Ein Funktionserhalt über einen Zeitraum von wenigstens 90 Minuten bei einer Exposition des Kabels im Ofen bis zu einer Temperatur von 1000°C stellt die höchste Funktionserhaltsklasse (E 90) dar. Ein Funktionserhalt von wenigstens 90 Minuten wird beispielsweise für Wasserdruckerhöhungsanlagen zur Löschwasserversorgung, für Lüftungsanlagen in Sicherheitstreppenräumen, innenliegende Treppenräume, Fahrschächte und Triebwerksräume von Feuerwehraufzügen, für Rauch und Wärmeabzugsanlagen und für Feuerwehraufzüge gefordert.

Die Verwendung von Metallhydroxiden, insbesondere von Aluminiumhydroxid, als Füllstoff für flammwidrige Polymercompounds ist allgemein bekannt. Um eine gute Flammschutzwirkung zu erzielen, wird dabei eine möglichst hohe Füllstoffkonzentration angestrebt. Für diese Zwecke geeignete Polymere sind beispielsweise Polyolefine, Ethylencopolymere oder Mischungen solcher Polymere. Im Brandfall sollen diese gefüllten Polymerzusammensetzungen zum einen die Brandausbreitung entlang dem Kabel verhindern, zum anderen eine gewisse Schutzfunktion für die isolierten Adern übernehmen. Flammhemmende thermoplastische Zusammensetzungen mit hoher Füllstoffmenge werden beispielsweise in der EP-A-0 054 424 und der EP-A-0 082 407 beschrieben. Die WO 93/2056 beschreibt Mischungen aus einem thermoplastischen Material, beispielsweise auf Basis von Ethylenvinylacetat, und Alu- miniumhydroxid, die bei der Herstellung feuerbeständiger Kabel verwendet werden, wie sie beispielsweise in der petrochemischen Industrie zum Einsatz kommen können. Ein Nachteil solcher gefüllten Polymere besteht jedoch allgemein darin, daß ihre Schutzwirkung nur von begrenzter Dauer ist. Besonders bei hohen Temperaturen kommt es binnen weniger Minuten zu einer Zerstörung aller vorhandenen polymeren Strukturen, einschließlich Aderisolationen. Diese Materialien erlauben daher keinen Funktionserhalt, der besonderen Anforderungen wie beispielsweise der Funktionserhaltsklasse E 90 genügt, so daß sich ihre Verwendung auf Gebiete beschränkt, auf denen weniger kritische Anforderungen gestellt werden.

Um im Brandfall einen Isolationserhalt oder Funktionserhalt der elektrischen Kabeln zu erreichen, werden daher hochtemperaturfeste Materialien eingesetzt. In diesem Zusammenhang sind Isolierschichten auf Basis von Silikatfasern oder Siliconkautschuk bekannt. Hierbei macht man sich die elektrisch isolierende Eigenschaft und die Hitzebeständigkeit von $SiO_2$ zunutze, das bei der Verbrennung der organischen Bestandteile eines Siliconpolymers entsteht. So beschreibt das Deutsche Gebrauchsmuster G 81 09 304 elektrische Kabel, dessen von einem Mantel umschlossene Adern eine zweischichtige Isolierung aus einer äußeren Isolierschicht aus einem thermoplastischen oder elastomeren Isolierwerkstoff, beispielsweise Ethylen-Vinylacetat, und einer inneren Isolierschicht aus extrudiertem Silicongummi aufweist. Das Deutsche Gebrauchsmuster G 92 16 599 beschreibt elektrische Kabel, deren Leiter von einem Silicongummi und einem nicht vernetzten Ethylen-Vinylacetat als Ademumhüllung umgeben sind; auf diese Adernumhüllung ist als Flammbarriere eine Bandierung mit aufgebrachtem Keramikmaterial aufgewickelt. Auch solche Isolationen erlauben jedoch noch keinen Funktionserhalt, der besonders hohen Anforderungen genügt.

Die DE-A-37 13 267 beschreibt flammwidrige Massen auf Basis von Siliconkautschuk in gießfähiger oder zu einem Elastomer erhärtbarer Form, die feinverteiltes Titandioxid und ggf. Siliciumdioxid, katalytische Mengen von feinverteiltem Platin und eine Löschsubstanz wie Natriumbicarbonat enthalten, die in dem Elastomer ein feuerhemmendes Löschgas freisetzt, das das Elastomer unterhalb seiner Zersetzungstemperatur zu einem mechanisch stabilen mikroporösen Material aufschäumt. Die mechanische Festigkeit der Schaumstruktur wird durch die Anwesenheit des verfestigend wirkenden Ttandioxids bedingt, das in einer Menge von ungefähr 5 Gewichtsteilen pro 100 Gewichtsteilen Siliconkautschuk vorliegt. Aus solchen Massen hergestellte elektrisch isolierende Bauteile besitzen im Brandfall eine längere Funktionsfähigkeit und eine verbesserte Kriechstromfestigkeit, genügen jedoch immer noch nicht höheren Anforderungen.

Aus der DE-A-37 22 755 sind zu Siloxanelastomeren härtbare Massen bekannt, die ein hochviskoses Polydiorganosiloxan, einen verstärkenden Siliciumdioxidfüllstoff, ein Copolymer aus Einheiten $R_3SiO_{0.5}$ und $SiO_2$, worin R beispielsweise Methyl bedeutet, sowie Glimmer und ein Organoperoxid enthalten. Der Anteil des Siliciumdioxidfüllstoffs, der als Verstärkungsmaterial für das Elastomer dient, beträgt etwa 5 bis 75 Gewichtsteile auf 100 Gewichtsteile Polydiorganosiloxan. Der Glimmeranteil, der eine Verbesserung der Integrität der Isolierung unter Feuerbedingungen bewirken soll, liegt zwischen 85 und 150 Gewichtsteilen auf 100 Gewichtsteile Polydiorganosiloxan, da zu hohe Mengen, beispielsweise über 220 Gewichtsteilen, zu Schwierigkeiten bei der Verarbeitung und zu schlechteren mechanischen Eigenschaften des gehärteten Elastomeren führen.

Die US-A-4,288,360 und die US-A-3,862,082 beschreiben zu Siliconkautschuken härtbare, flammwidrige Massen auf Basis von Polyorganosiloxanen, die anorganische Füllstoffe, beispielsweise Oxide wie Titandioxid als verstärkende Füllstoffe enthalten. Die Füllstoffkonzentrationen, die diese Zusammensetzungen erlauben, ermöglichen einerseits noch keinen ausreichenden Funktionserhalt unter extremen Bedingungen, andererseits sind auch die mechanischen Eigenschaften dieser gefüllten Polyorganosiloxanmassen bei höheren Füllstoffgehalten für eine Handhabung unter Normalbedingungen noch nicht zufriedenstellend.

Am häufigsten, insbesondere bei hohen brandtechnischen Anforderungen, finden Glimmerbandierungen Verwendung, die unmittelbar auf dem Leitungsdraht aufgebracht sind. Für den Funktionserhalt gemäß E 90 sind bislang nur Kabel mit glimmerbandierten Leitern bekannt, wobei die Glimmerbandierungen meistens in Verbindung mit den oben beschriebenen hochgefüllten Polymeren oder mit anderen zusätzlichen Elementen, beispielsweise keramischen Werkstoffen verwendet werden. So beschreibt die DE-A-41 32 390 elektrische Kabel mit Funktionserhalt, in denen zur Isolierung der einzelnen Leiter eine Isolierschicht vorgesehen ist, die aus zwei Lagen eines mit Glimmer beschichteten Glasgewebebandes und einer dazwischen angeordneten dünnen Schicht eines hochtemperaturfesten Keramikklebers besteht. Die US-A-5 227 586 beschreibt ebenfalls flammwidrige elektrische Kabel, die gegen Temperaturen um 1000°C beständig sind. Dabei befinden sich die von einem Isoliermaterial wie Siliconkautschuk umgebenen elektrischen Leiter in einer Hülle aus zwei übereinander aufgebrachten Flammbarriereschichten, beispielsweise Glimmerschichten. Die CH-A-683 213 beschreibt elektrische Kabel mit Isolations- und/oder Funktionserhalt, worin die einzelnen Adern mit einer Glimmerbandage umhüllt sind, die im wesentlichen aus Glasfaserband und Glimmerplättchen besteht. Auf diese Bandage ist eine Isolierung aus halogenfreiem Polymer aufgebracht, die schließlich wiederum von einer zweiten Bandage aus Glasgarn umgeben ist.

Glimmerbandierungen sind jedoch relativ kostenintensiv. Ferner sind auch Glimmerbandierungen auf elektrischen Leitern nur begrenzt temperaturbeständig und nicht besonders gut geeignet, wenn gleichzeitig mechanische Beanspruchungen stattfinden. Mit zunehmenden Anforderungen müssen daher speziellere Glimmertypen und zunehmende Glimmerschichtdicken verwendet werden. Die Glimmerpartikel müssen außerdem durch Harze und Bindemittel, die nicht besonders hochtemperaturfest sind, auf Glasgewebeträgern fixiert werden. Einige keramische Werkstoffe weisen häufig über das geforderte Temperaturband keine ausreichende elektrische Durchschlagsfestigkeit auf. Die hohen Kosten einiger keramischer Materialien lassen diese ebenfalls nicht als preiswerte Alternative in Betracht kommen. Aus diesen Gründen besteht ein großer Bedarf an weiteren Materialien, die die Herstellung von Brandsicherheitskabeln erlauben, die hohen sicherheitstechnischen Anforderungen genügen.

Die DE-A-30 08 084 bzw die korrespondierende FR-A-2 450 855 beschreiben Polyorganosiloxanzusammensetzungen, die bei bis zu 700 Gewichtsteilen Polyorganosiloxan bis zu 300 Gewichtsteile eines keramikbildenden Füllstoffs aufweisen. Um nach der Vernetzung dieser Zusammensetzung ein ausreichend elastisches und biegsames Produkt zu erhalten darf der Füllstoffgehalt jedoch 100 Gewichtsteile nicht überschreiten. Benetzungsmittel für den Füllstoff werden in diesen Dokumenten nicht beschrieben.

Die EP 0 007 090 B1 offenbart eine keramisierbare flammwidrige Zusammensetzung, im wesentlichen bestehend aus mindestens einem siliciumorganischen Polymer, das gegebenenfalls freies Siliciumdioxid enthält, mindestens einem keramisierenden Füllstoff, mindestens einem nichtkeramisierenden Füllstoff, freies Siliciumdioxid ausgenommen, in einer Menge von 0-100 Gewichtsteilen pro 100 Gewichtsteile siliciumorganisches Polymer ggf- einem Hydrophebierungsmittel für den keramisierenden und/oder den nicht keramisierenden Füllstoff und einem Vernetzungsmittel.

Aufgabe der vorliegenden Erfindung ist es daher, ein kostengünstiges, problemlos verarbeitbares Material zur Verfügung zu stellen, das sich insbesondere zur Herstellung von elektrischen Kabel mit hohem Isolations- und/oder Funktionserhalt eignet, die auch bei üblichen Gebrauchstemperaturen ausgezeichnete mechanische Eigenschaften aufweisen.

Diese Aufgabe wurde durch eine Zusammensetzung nach Anspruch 1 gelöst.

Gegenstand der Erfindung sind ferner elektrische Adern oder Kabel mit Isolations- und/oder Funktionserhalt, die wenigstens einen Bestandteil auf Basis dieser keramisierbaren Zusammensetzung enthalten.

Als siliciumorganische Polymere werden zweckmäßig die auf diesem Gebiet bekannten, bevorzugt elastischen oder elastifizierbaren, siliciumorganischen Polymere eingesetzt, wie sie im Handel erhältlich sind. Beispiele für geeignete siliciumorganische Polymere sind Polyorganosilazane, Silicone und Polyorganosiloxane, beispielsweise Siliconharze, Silicongummis und Siliconkautschuke wie HTV-Siliconkautschuk. Bevorzugt werden Silicone und Polyorganosiloxane eingesetzt. Die siliciumorganischen Polymere können allein oder in Form von Mischungen vorliegen.

Die siliciumorganischen Polymere stellen die Matrix für die keramisierende Verbindung dar. Sie können einen mehr oder minder hohen Gehalt an freiem Siliciumdioxid ($SiO_2$) aufweisen. Bevorzugt werden siliciumorganische Polymere mit einem mittleren $SiO_2$-Gehalt, beispielsweise HTV-Siliconkautschuke mit einer Shore A-Härte von 50-70 verwendet. Besonders geeignet sind Silicone und Polyorganosiloxane mit niedrigen oder mittleren Viskositäten, da diese einen hohen Gehalt an keramisierenden Füllstoffen und, gegebenenfalls, auch nicht keramisierenden Füllstoffen zulassen.

Auch hochviskose Polymere, die einen weniger hohen Gehalt an keramisierenden Füllstoffen erlauben, finden jedoch Anwendung, beispielsweise in Bestandteilen der Brandsicherheitskabel, an die geringere Anforderungen gestellt werden. Geeignete siliciumorganische Polymere umfassen Polymere mit zur Vernetzung geeigneten Gruppen, beispielsweise H-Atome, OH-Gruppen oder Vinylgruppen; die erfindungsgemäße Zusammensetzung liegt also im fertigen, verarbeiteten Endprodukt in vernetzter oder teilvernetzter Form vor.

Geeignet als keramisierende Füllstoffe sind sämtliche mit $SiO_2$ keramikbildende Verbindungen. Beispiele für keramisierende Füllstoffe sind Silikate wie Aluminiumsilikat, Trtansilikat und Magnesiumsilikat, Aluminate wie Natriumaluminat, Nitride wie Siliciumnitrid, Bornitrid und Aluminiumnitrid, Carbide wie Wolframcarbid, Titancarbid und Molybdäncarbid, und Oxide wie Magnesiumoxid, Titandioxid und Aluminiumoxid oder Mischoxide, insbesondere Mischoxide von $Al_2O_3$ und $SiO_2$, beispielsweise Mullit (3 $Al_2O_3$ x 2 $SiO_2$). Die keramisierenden Füllstoffe können allein oder in Mischung eingesetzt werden. Bevorzugte Füllstoffe sind Oxide. Besonders bevorzugt wird Aluminiumoxid ($Al_2O_3$) in seinen verschiedenen Modifikationen, beispielsweise $\alpha$-$Al_2O_3$, verwendet. Unter keramisierenden Füllstoffen werden hier auch Vorläuferverbindungen der eigentlichen keramikbildenden Stoffe verstanden, d.h. Verbindungen, die beispielsweise unter Hitzeeinwirkung in diese Verbindungen übergehen. So können statt der Oxide als Vorläuferverbindungen beispielsweise auch Aluminiumhydroxide wie Diaspor eingesetzt werden, die beim Erhitzen in $Al_2O_3$ übergehen. Bevorzugt werden jedoch die keramisierenden Verbindungen selbst eingesetzt.

Der keramisierende Füllstoff liegt zweckmäßig in feinpulverisierter Form vor. Seine spezifische Oberfläche beträgt zweckmäßig ungefähr 0,5 - 5,0 $m^2$/g, seine mittlere Korngröße zweckmäßig 1,0 - 4,0 µm, beispielsweise ungefähr 1,5 bis 2,5µm. Die Menge des Füllstoffs wird entsprechend dem Verwendungszweck und den Anforderungen an den Funktionserhalt gewählt. Demgemäß enthält die Zusammensetzung auf 100 Gewichtsteile siliciumorganisches Polymer wenigstens 50 Gewichtsteile, bevorzugt wenigstens 100 Gewichtsteile, und besonders bevorzugt wenigstens 200 bis 300 Gewichtsteile keramisierenden Füllstoff. Die obere Grenze der Füllstoffkonzentration wird durch die praktischen Gegebenheiten bestimmt, beispielsweise auch die Wahl der siliciumorganischen Polymere, und liegt ungefähr bei 450 bis 500 Gewichtsteilen pro 100 Gewichtsteilen siliciumorganisches Polymer. Geeignete Füllstoffkonzentrationen liegen zweckmäßig zwischen 100-450 Gewichtsteilen, bei höheren Anforderungen zwischen 200 bis 450 Gewichtsteile, und bevorzugt zwischen 300 und 400 Gewichtsteilen pro 100 Gewichtsteilen Polymerkompnente.

Falls gewünscht kann die Zusammensetzung neben den keramisierenden Füllstoffen auch einen Gehalt an nichtkeramisierenden anorganischen Füllstoffen aufweisen. Geeignete nichtkeramisierende Füllstoffe sind beispielsweise die auch in Verbindung mit herkömmlichen Polymercompounds bekannten Füllstoffe wie Carbonate, insbesondere Calciumcarbonat ($CaCO_3$) und Magnesiumcarbonat ($MgCO_3$) oder Mischsalze wie Mg-Ca-Carbonat-Hydrate. Ein bevorzugter Füllstoff ist $CaCO_3$. Die Menge an nichtkeramisierenden Füllstoffen beträgt ggf. zweckmäßig bis zu 200 Gewichtsteile, vorzugsweise bis zu 150 Gewichtsteile, beispielsweise 10-100 Gewichtsteile Füllstoff pro 100 Gewichtsteilen siliciumorganisches Polymer, wobei die praktische obere Grenze für die Gesamtsumme an keramisierenden und nichtkeramisierenden Füllstoffen in der erfindungsgemäßen Zusammensetzung wie oben beschrieben bei etwa 450 bis 500 Gewichtsteilen liegt.

Die Zusammensetzung weist einen Gehalt an Benetzungsmittel für die keramisierenden Füllstoffe auf. Als Benetzungsmittel verwendet werden Tenside, also natürliche und synthetische amphiphile chemische Verbindungen. Zweckmäßige Benetzungsmittel sind Metallseifen höherer Fettsäuren, bevorzugt Aluminiumseifen. Geeignete Seifen sind im Handel erhältlich, beispielsweise mit Schmelzbereichen von ungefähr 100 bis 150°C. Besonders bevorzugt wird Aluminiumstearat verwendet. Die Metallseifen können auch in roher Form mit einem mehr oder weniger großen Gehalt an freien Fettsäuren eingesetzt werden.

Der Anteil des Benetzungsmittels hängt von der Konzentration an keramisierendem Füllstoff ab. Zweckmäßig liegt das Benetzungsmittel in der Zusammensetzung in einer Menge von wenigstens 0,5 Gewichtsteilen pro 100 Gewichtsteilen Polymerkomponente vor, vorteilhaft in einer Menge von wenigstens 3 Gewichtsteilen. Zweckmäßige Mengen an Benetzungsmittel liegen zwischen 0,5 und 25, insbesondere zwischen 1 und 20, beispielsweise zwischen 3 und 15 Gewichtsteilen pro 100 Gewichtsteilen Polymerkomponente.

Es wurde gefunden, daß die mechanisch feste Struktur zum Schutz des Leiters, die einen ausreichend hohen Isolations- und/oder Funktionserhalt des Kabels im Brandfall gewährleistet, dadurch zustande kommt, daß das beispielsweise unter Wärmeeinwirkung oder beim Verbrennen des siliciumorganischen Polymers entstandene oder bereits frei vorliegende $SiO_2$ mit dem mit einem Benetzungsmittel behandelten keramisierenden Füllstoff über eine Art Sinterung reagiert. Elektronenmikroskopische Untersuchungen haben gezeigt, daß die erreichte Strukturfestigkeit der normalerweise in Pulverform vorliegenden Substanzen über eine sog. Randschichtensinterung möglich wird, die überraschenderweise bereits bei Temperaturen stattfinden kann, die unter dem Schmelzpunkt des elektrischen Leiters liegen. Das Benetzungsmittel erfüllt somit eine doppelte Funktion. Einerseits erlaubt das Benetzungsmittel eine hohe Konzentration an keramisierenden Füllstoffen in der Zusammensetzung, wobei auch noch bei extrem hohem Füllstoffgehalt eine Viskosität der Rezeptur einstellbar ist, die die Compoundierung und Verarbeitung dieser Zusammensetzungen auf konventionellen Maschinen, beispielsweise Walzwerken und Extrudern, zuläßt. Andererseits bewirkt das Benetzungsmittel einen speziellen Ankopplungseffekt des keramisierenden Füllstoffs an die Matrix. Die Zugabe eines Benetzungsmittels wirkt sich dabei markant auf die Eigenschaften der erfindungsgemäßen Zusammensetzung und der mit ihr erhältlichen Produkte aus, und zwar sowohl bei üblichen Gebrauchstemperaturen, d.h. Temperaturen, wie sie für die Herstellung und bei der Handhabung der Produkte auftreten, als auch im Brandfall, also im keramisierten Zustand. In beiden Fällen werden die mechanischen Eigenschaften, z.B. Bruchfestigkeit und Rißfestigkeit signifikant verbessert.

Gegebenenfalls kann die erfindungsgemäße Zusammensetzung weitere Hilfs- und Zusatzstoffe, insbesondere Verarbeitungshilfsmittel, Weichmacher, Vernetzungskatalysatoren oder Vernetzungsmittel, und Pigmente enthalten.

Je nach Art der siliciumorganischen Polymere kann die Zusammensetzung mit dem Vernetzungsmittel auch übliche Vernetzungsmittel, beispielsweise organische Peroxide wie Benzoylperoxid oder 2,4-Dichlorbenzoylperoxid, oder Vemetzungskatalysatoren, beispielsweise Additionskatalysatoren wie feinverteiltes Platin oder Platinverbindungen, enthalten. Die Menge an Vernetzungsmittel in der Zusammensetzung beträgt im Bedarfsfall zweckmäßig bis zu 5 Gewichtsteile, beispielsweise 0,5-5 Gewichtsteile, vorzugsweise 1-3 Gewichtsteile pro 100 Gewichtsteilen siliciumorganisches Polymer.

Die erfindungsgemäße Zusammensetzung liegt bevorzugt als sog. keramischer Polymercompound, d.h. als verarbeitungsfähige Mischung vor, kann aber auch eine - beispielsweise unvernetzte - Vorstufe eines solchen Compounds darstellen.

Die erfindungsgemäße Zusammensetzung kann nach im Stand der Technik bekannten Verfahren durch Mischen bzw. compoundieren, d.h. Einarbeiten der einzelnen Komponenten in den Matrixwerkstoff, beispielsweise mit üblichen Knetmaschinen, hergestellt werden. Zweckmäßig werden die Füllstoffe mit dem Benetzungsmittel bereits vor der Compoundierung vorvermischt, bevorzugt mit dem ggf. aufgeschmolzenen Benetzungsmittel einem Beschichtungsprozeß unterworfen.

Die Vernetzung der Polymermatrix erfolgt gegebenenfalls nach bekannten Verfahren, beispielsweise mittels üblicher Vernetzungsmittel wie organischen Peroxiden, zweckmäßig nach der Compoundierung bei erhöhter Temperatur. Die Vernetzung kann aber bei Anwesenheit geeigneter funktioneller Gruppen auch nach anderen Mechanismen erfolgen, beispielsweise über eine Hydrosilylierungsreaktion in Gegenwart geeigneter Additionskatalysatoren.

Die Aufarbeitung der keramisierenden Füllstoffe zusammen mit einem Benetzungsmittel in einer Matrix als keramischer Polymercompound erlaubt eine Verarbeitung der Zusammensetzung, wie sie auch mit anderen hochgefüllten Mischungen bekannt ist. Die Verarbeitung erfolgt beispielsweise durch herkömmliche Extrusions- oder Coextrusionsverfahren mit Extrudern, wie sie im Stand der Technik bekannt sind. Ebenso kann die Verarbeitung auf herkömmlichen Gummiwalzwerken erfolgen.

Die erfindungsgemäße Zusammensetzung findet insbesondere Verwendung bei der Herstellung von Brandsicherheitskabeln, beispielsweise im Bereich der Aderisolationen, der gemeinsamen Aderumhüllungen oder Zwickel, der Trennschichten, d.h. der Schichten zwischen dem Leiter und der Isolation, der Zwischen- und Außenmäntel, und der Beiläufe.

Ein weiterer Gegenstand der Erfindung sind somit elektrische Adern oder ein- oder mehradrige elektrische Kabel mit Isolations- und/oder Funktionserhalt, die unter Verwendung der erfindungsgemäßen Zusammensetzung hergestellt sind.

In den nachfolgenden Abbildungen zeigen:

Fig. 1: ein in Ansicht und aufgesprengt dargestelltes Ausführungsbeispiel einer elektrischen Ader;

Fig. 2: ein in Ansicht und teilweise aufgesprengt dargestelltes Ausführungsbeispiel eines mehradrigen elektrischen Kabels;

Fig. 3: ein in Ansicht und teilweise aufgesprengt dargestelltes Ausführungsbeispiel eines mehradrigen elektrischen Kabels mit konzentrischem Leiter;

Die erfindungsgemäßen Adem oder Kabel mit Isolations-und/oder Funktionserhalt umfassen wenigstens einen ein- oder mehrdrähtigen elektrischen Leiter, beispielsweise einen Kupferleiter, und wenigstens einen Bestandteil auf Basis der erfindungsgemäßen Zusammensetzung, insbesondere Trennschichten und/oder Mäntel, beispielsweise Zwischen- und/oder Außenmäntel, gemeinsame Aderumhüllungen bzw. Zwickel, Isolationen und Beiläufe. Grundsätzlich können beliebige geeignete Bestandteile der Adern oder Kabel auf Basis der erfindungsgemäßen Zusammensetzung hergestellt sein. Individuelle Ausführungsformen orientieren sich aber beispielsweise an den spezifischen Anforderungen an den Funktions- und/oder Isolationserhalt oder an den spezifischen Normvorgaben.

Der erfindungsgemäße flammwidrige keramische Polymercompound kann in den Adern oder Kabeln in Kombination mit anderen für den Kabelaufbau bekannten Materialien, beispielsweise halogenfreien gefüllten Polymercompounds oder in Kombination mit mineralischen Werkstoffen vorliegen. In einer besonderen Ausführungsform wird der keramische Polymercompound in der Ader oder dem Kabel in Kombination mit Siliconkautschuk eingesetzt. Beispielsweise kann eine Trennschicht aus keramischem Polymercompound in eine Isolation aus Siliconkautschuk integriert sein. In einer weiteren bevorzugten Ausführungsform wird der erfindungsgemäße keramische Polymercompound, insbesondere im Bereich von Isolationen, als sog. Faserverbundstoff eingesetzt. Dabei werden vorzugsweise Fasern aus nichtbrennbaren mineralischen Materialien, insbesondere Silikaten, Glas und Keramik verwendet. Die Fasern können entweder als Gewebe zusammen mit dem Compound eine Laminatstruktur bilden oder ungeordnet im Compound vorliegen.

Beispiele erfindungsgemäßer elektrischer Adern und Kabel werden nachfolgend unter Bezug auf die Abbildungen näher erläutert.

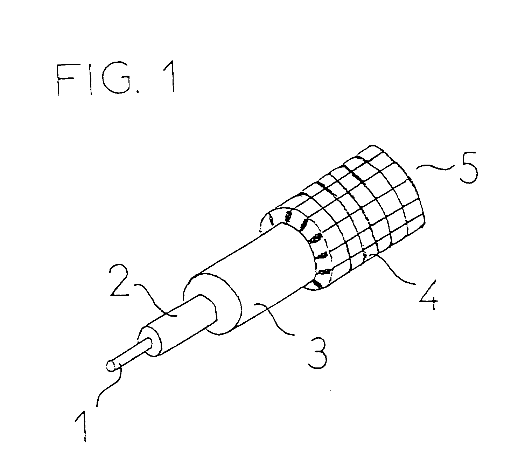

Fig. 1 stellt ein Beispiel für den Aufbau einer elektrischen Ader 5 dar. Die gezeigte Ader besteht aus einem elektrischen Leiter 1, einer Trennschicht 2 und einer Isolation 3 in Kombination mit einem Verstärkungsgewebe oder einem Geflecht 4, wobei entweder die Trennschicht 2 oder die Isolation 3 oder beide aus dem erfindungsgemäßen keramischen Polymercompound ausgebildet sind.

Bevorzugt besteht die auf den elektrischen Leiter 1 der Ader 5 aufgebrachte Trennschicht 2 aus der erfindungsgemäßen Zusammensetzung. Diese Trennschicht 2 kann im Brandfall die maßgebliche funktionserhaltende Schicht und gleichzeitig auch eine isolierende Schicht darstellen. Die Wandstärke einer Trennschicht hängt von den Anforderungen an den Funktionserhalt ab und beträgt zweckmäßig wenigstens 0,3 mm, bevorzugt wenigstens 0,4 mm. Über der Trennschicht 2 befinden sich die eigentliche Isolation 3 der elektrischen Ader 5 und ein Verstärkungsgewebe oder ein Geflecht 4, wobei die Reihenfolge von Isolation 3 und Verstärkungsgewebe oder Geflecht 4 über der Trennschicht 2 auch vertauscht sein kann. Die Isolation 3 kann aus allen hierfür üblichen und zulässigen Materialien, beispielsweise aus den auf diesem Gebiet bekannten halogenfreien vernetzbaren und unvernetzbaren Isolationsmaterialien, z. B. Ethylen-Propylen-Dien-Terpolymeren (EPDM-Kautschuken), bestehen. Vorteilhaft besteht die Isolation 3 aus einem Siliconkautschuk, so daß die Trennschicht 2 aus keramischem Polymercompound in eine Isolation aus Siliconkautschuk integriert ist. Die Isolation 3 kann aber auch selbst aus keramischem Polymercompound bestehen. In beiden Fällen wird eine weitere Verbesserung des Funktionserhalts erreicht. Vorteilhaft wird die Isolation 3 mit einem Verstärkungsgewebe oder Geflecht 4 kombiniert, das aus einem nichtbrennbaren mineralischen Werkstoff, vorzugsweise Mineralfasern aus Silikaten, Glas und Keramik, besteht.

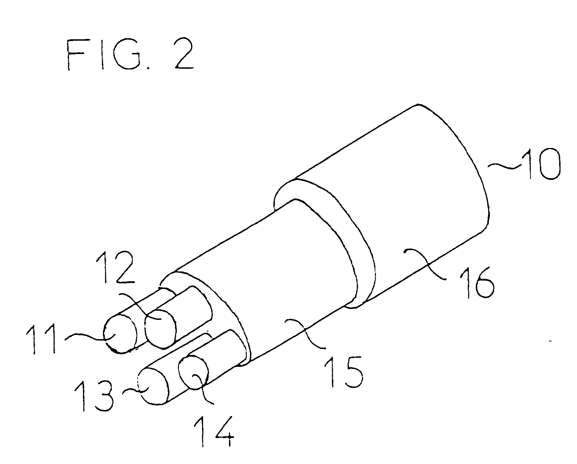

Fig. 2 stellt ein Beispiel für den Aufbau eines mehradrigen elektrischen Kabels 10 dar. Das Kabel 10 umfaßt elektrische Adern 11, 12, 13 und 14, eine gemeinsame Aderumhüllung bzw. einen Zwickel 15 und einen Außenmantel 16, der über der gemeinsamen Aderumhüllung 15 aufgebracht ist. Wenigstens ein Bestandteil dieses elektrischen Kabels ist auf Basis des erfindungsgemäßen Polymercompounds hergestellt. Üblicherweise enthalten die elektrischen Adern, die beispielsweise gemäß den in Fig. 1 dargestellten Adern 5 aufgebaut sein können, eine Trennschicht auf Basis der erfindungsgemäßen Zusammensetzung. In einer bevorzugten Ausführungsform umfaßt die gemeinsame Aderumhüllung (Zwickel) 15, allein oder zusammen mit den Trennschichten der Adern, den erfindungsgemäßen keramischen Polymercompound. Besonders bevorzugt wird der keramische Polymercompound hierbei in Kombination mit einem Gewebeband aus temperaturbeständigen mineralischen Werkstoffen eingesetzt. Der Außenmantel 16 besteht üblicherweise aus herkömmlichen Materialien, beispielsweise halogenfreien gefüllten Polymeren, kann aber alternativ ebenfalls unter Verwendung des keramischen Polymercompounds hergestellt sein.

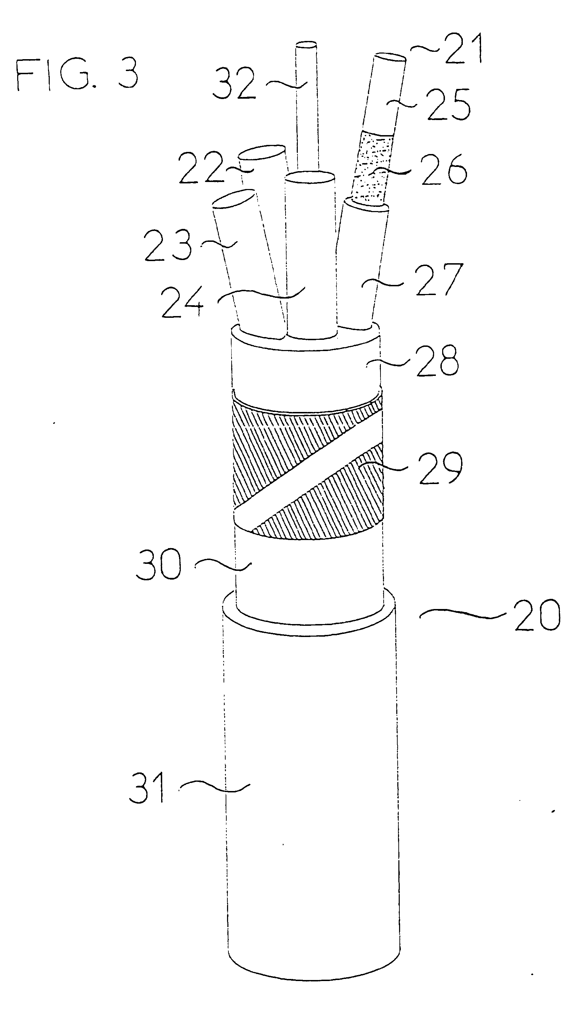

Fig. 3 stellt ein Beispiel für den Aufbau eines mehradrigen elektrischen Kabels 20 mit einem konzentrischen Leiter 29 dar.

Das dargestellte Kabel umfaßt vier Adern 21, 22, 23 und 24, die ihrerseits aus einem elektrischen Leiter 25, einer Trennschicht 26 und einer Isolation 27 bestehen. Die Adern können aber ebenso einen Aufbau gemäß der in Fig. 1 beschriebenen Ader 5 aufweisen. Das Kabel kann außerdem Beiläufe wie den hier dargestellten Zentrumsbeilauf 32 aufweisen. Adem und Beilauf sind von einer gemeinsamen Aderumhüllung bzw. einem Zwickel 28 umgeben. Über der gemeinsamen Aderumhüllung (Zwickel) 28 befindet sich ein konzentrischer elektrischer Leiter 29, beispielsweise ein umwundener Kupferdraht oder eine Kupferband-Wendel. Auf diesen elektrischen Leiter 29 ist eine weitere Trennschicht 30 aufgebracht, über der sich ein Mantel 31 befindet.

Erfindungsgemäß sind ein oder mehrere Komponenten eines derartigen elektrischen Kabels unter Verwendung des keramischen Polymercompounds hergestellt. In einer bevorzugten Ausführungsform besteht wenigstens eine der Trennschichten 26 und 30 aus dem erfindungsgemäßen keramischen Polymercompound. Bevorzugt besteht die Trennschicht 26 der elektrischen Ader aus keramischem Polymercompound und ist in eine Isolation 27 aus Siliconkautschuk integriert. In einer weiteren Ausführungsform besteht die Isolation 27 allein aus keramischem Polymercompound. In einer anderen Ausführungsform ist die gemeinsame Aderumhüllung (Zwickel) 28 entweder allein oder zusammen mit dem Beilauf 32 auf Basis des keramischen Polymercompounds hergestellt. Der Außenmantel 31 besteht üblicherweise aus herkömmlichen Materialien, beispielsweise halogenfreien gefüllten Polymeren, kann aber alternativ ebenfalls unter Verwendung des keramischen Polymercompounds hergestellt sein.

Das Aufbringen der Schichten und/oder Mäntel kann nach üblichen Verfahren, insbesondere Extrudierverfahren, erfolgen. Besonders vorteilhaft ist es, wenn mehrere Schichten oder Mäntel, beispielsweise die Trennschicht und die Isolationsschicht, mittels einer Tandem- oder Coextrusion gemeinsam aufgebracht werden.

Die erfindungsgemäße Zusammensetzung erlaubt also die Herstellung von Brandsicherheitskabein mit Isolationsund/oder Funktionserhalt. Die Zusammensetzung eignet sich sowohl für Kabel niedriger Funktionserhaltsklassen, beispielsweise der Funktionserhaltsklasse E 30 nach DIN 4102 Teil 12 oder der Funktionserhaltsklasse FE 180 nach IEC 331, als auch für Kabel, die den Anforderungen hoher Funktionserhaltsklassen genügen müssen. Beispielsweise läßt sich erfindungsgemäß auch ein Funktionserhalt über 90 Minuten bei einer Exposition des Kabels bis ungefähr 1000°C (Funktionserhaltsklasse E 90 nach DIN 4102 Teil 12) ohne weiteres erreichen. Der erfindungsgemäße keramische Polymercompound erlaubt außerdem die Ausbildung einer genügenden mechanischen Strukturfestigkeit im unteren Temperaturbereich, also auch in einem Temperaturbereich, der von der Zerstörung der polymeren Matrix bis zur Ansinterung der keramischen Partikel reicht.

Die auf Basis der erfindungsgemäßen Zusammensetzung erhaltenen Kabel unterscheiden sich bei der üblichen Instalation und Benutzung nicht von herkömmlichen Kabeln. Auch das Abisolieren der Leiter stellt kein Problem dar. Die pulverförmigen keramisierenden Füllstoffe sind durch ihre Einbettung in die polymere Matrix nicht als solche zu erkennen. Die Eigenschaften des Polymers bestimmen das Erscheinungsbild der Kabel. Die Aufarbeitung der keramisierenden Füllstoffe in einem Compound erlaubt ein Verarbeiten, wie es mit anderen herkömmlichen hochgefüllten Materialien bekannt ist. Die Kabel weisen sowohl bei üblichen Gebrauchstemperaturen als auch im keramisierten Zustand im Brandfall hervorragende mechanische Eigenschaften, insbesondere hohe Bruchdehnung und geringe Rißbildung (Abplatzungen) auf. Der erfindungsgemäße Polymercompound stellt ferner eine kostengünstige Alternative zu den bekannten verwendeten Materialien dar. Insbesondere kann die Verwendung kostspieliger Materialien, wie Glimmerbandagen, entfallen.

Die vorliegende Erfindung wird durch die folgenden Beispiele weiter erläutert:

Beispiel 1 (nicht erfindungsgemäß)

350 Gewichtsteile $Al_2O_3$ (mittlere Korngröße 1,5-2,5µm) wurden mit einem Laborkneter in üblicher Weise mit 100 Gewichtsteilen eines plastifizierten HTV-Siliconkautschuks, Härte Shore A 60, und 1,5 Gewichtsteilen 2,4-Dichlorbenzoylperoxid compoundiert. Die Viskosität dieses Compounds wurde bei den für die Extrusion repräsentativen Schergeschwindigkeiten von 10 und 200 1/s mit einem Hochdruckkapillarrheometer (Göttfert Rheograph 2002) bestimmt; als Meßgeometrie wurde eine Kreiskapillare mit 2 mm Durchmesser eingesetzt. Die gemessene Viskosität ist in der nachstehenden Tabelle I angegeben.

Die bei den Viskositätsmessungen erzeugten Materialstränge mit einem Durchmesser von 2 mm ± 0,1 (Durchmesser der Kapillare des Hochdruckkapillarrheometers) wurden weiter nach firmeninternen Verfahren zur Bestimmung der Materialschwindung, des strukturellen Verhaltens und der mechanischen Eigenschaften nach einer thermischen Behandlung verwendet. Hierfür wurde die Matrixkomponente bei 150°C und einer Haltezeit von ca 10-15 Minuten in einem Wärmeschrank vernetzt. Nach der Vernetzung wurden Stränge à 20 cm zugeschnitten, von denen bei Raumtemperatur ein minimaler Biegedurchmesser ausgewertet wurde. Der gemessene Wert ist der Abstand d (in mm) zwischen den parallelen Abschnitten eines U-förmigen Halbbogenstrangabschnitts, bei dem gerade ein Anreißen an der Zugoberfläche des Stranges erfolgt. Ein Wert von d = 0 mm bedeutet, daß sich die Proben bis zur Anlage der beiden parallelen Schenkel ohne Anriß knicken lassen. Der gemessene Biegedurchmesser ist in der nachstehenden Tabelle I angegeben.

Zur Bestimmung der mechanischen Eigenschaften nach einer thermischen Behandlung wurden ebenfalls vernetzte Stränge à 20 cm verwendet. Die Stränge wurden in einen Ofen auf eine feuerfeste Platte gelegt. Die Aufheizung erfolgte mit 50 K/min bis zur Endtemperatur von 1000°C. Die Haltezeit betrug 180 min, worauf sich eine freie Abkühlung anschloß. Die Materialschwindung wurde nach Messung der Stränge (Länge L) nach dem Ofenlauf bestimmt und aus der Längendifferenz vor und nach der thermischen Behandlung errechnet. Danach ergibt sich die Schwindung zu

$$100\% - \frac{L[cm] \times 100\%}{20 \text{ cm}}$$

Die Ergebnisse sind in Tabelle II wiedergegeben.

Das Aufreißverhalten (Rißbildung, Abplatzungen) der auf 1000°C erhitzten Materialien wurde visuell ausgewertet und mit einer Klassifikation von 1 bis 4 bewertet. Dabei wurde vornehmlich die Rißöffnungsgeometrie an der Oberfläche in Zusammenhang mit der sichtbaren Tiefe der Risse bewertet. Die Ergebnisse sind wiederum in Tabelle II wiedergegeben.

Die bei 1000°C thermisch behandelten Materialien wurden visuell auf Bruchfestigkeit geprüft. Hierbei wurde der runde Prüfling längs auf eine Stahlplatte (45 x 45 mm) gelegt und mit einem flachen Stempel aus Stahl ($\phi$ = 12 mm) bis zum Bruch belastet. Tabelle II gibt die Gesamtlast an, bei der ein Bruch oder eine 1,0 mm Durchmesserreduktion des Prüflings erfolgte.

Beispiel 2 (nicht erfindungsgemäß)

350 Gewichtsteile $Al_2O_3$ wurden wie in Beispiel 1 mit 100 Gewichtsteilen plastifiziertem HTV-Siliconkautschuk und 1,5 Gewichtsteilen 2,4-Dichlorbenzoylperoxid compoundiert, mit der Änderung, daß dem Kautschuk vorder Compoundierung 6 Gewichtsteile Siliconöl zugefügt wurden.

Die Viskositätsmessungen, die Bestimmung der Biegefestigkeit, der Materialschwindung, der Aufreißfestigkeit und der Bruchfestigkeit erfolgte wie in Beispiel 1. Die Ergebnisse sind in den Tabellen I und II wiedergegeben.

Beispiel 3

350 Gewichtsteile $Al_2O_3$ und 6 Gewichtsteile aufgeschmolzenes Aluminiumstearat wurden mit einem Laborkneter vorgemischt; anschließend wurde diese Mischung wie in Beispiel 1 mit 100 Gewichtsteilen HTV-Siliconkautschuk, Härte Shore A 60, und 1,5 Gewichtsteilen 2,4-Dichlorbenzoylperoxid compoundiert.

Die Viskositätsmessungen, die Bestimmung der Biegefestigkeit, der Materialschwindung, der Aufreißfestigkeit und der Bruchfestigkeit erfolgte wie in Beispiel 1. Die Ergebnisse sind in den Tabellen I und II wiedergegeben.

Beispiele 4-6 (nicht erfindungsgemäß)

Die Versuche der Beispiele 1 bis 3 wurden wiederholt mit der Ausnahme, daß die compoundierte Menge an keramisierendem Füllstoff 146 Gewichtsteile betrug.

Die Viskositätsmessungen, die Bestimmung der Biegefestigkeit, der Materialschwindung, der Aufreißfestigkeit und der Bruchfestigkeit erfolgte ebenfalls wie in den Beispielen 1 bis 3 beschrieben. Die Ergebnisse sind in den Tabellen I und II wiedergegeben.

Die Ergebnisse der Beispiele zeigen, daß bei Verwendung eines Benetzungsmittels gegenüber einer Zusammensetzung ohne Verarbeitungshilfsmittel oder mit Siliconöl als Verarbeitungshilfsmittel bei Raumtemperatur insbesondere bei einem hohen Fullstoffgehalt eine deutlich geringere Viskosität der unvernetzten Zusammensetzung und eine erhöhte Biegefestigkeit des daraus erhaltenen Materials zu beobachten ist. Bei thermisch bei 1000°C behandelten Materialzusammensetzungen zeigt sich bei hohen und niedrigeren Gehalten an keramisierendem Füllstoff eine deutlich höhere Rißfestigkeit, bei hohen Füllstoffkonzentrationen außerdem eine verbesserte Bruchfestigkeit und bei niedrigeren Konzentrationen eine geringere Materialschwindung.

## Tabelle I

|  | Beispiele 1 - 3* | | | Beispiele 4 - 6 (nicht erfindungsgemäß) | | |
|---|---|---|---|---|---|---|
| Zusatzstoff | Viskosität [$10^3$ Pas] bei Schergeschwindigkeit | | Biegefestigkeit (Rißbildung) bei U-förmiger Verformung | Viskosität [$10^3$ Pas] bei Schergeschwindigkeit | | Biegefestigkeit (Rißbildung) U-förmiger Verformung |
|  | 10 [1/s] | 200 [1/s] |  | 10 [1/s] | 200 [1/s] |  |
| – | 74 | 4,1 | d = 11 mm | 22 | 1,4 | keine |
| Siliconöl | 70 | 3,9 | d = 15 mm | 22 | 1,4 | keine |
| Al-stearat | 47 | 2,7 | keine bei max. Verformung(d=0) | 20 | 1,4 | keine |

## Tabelle II

|  | Beispiele 1 - 3* | | | | Beispiele 4 - 6 (nicht erfindungsgemäß) | | |
|---|---|---|---|---|---|---|---|
| Zusatzstoff | Material-schwindung [%] | Belastung bis Bruch | | Rißbildung Abplatzungen | Material-schwindung [%] | Belastung bis Bruch [kg] | Rißbildung Abplatzungen |
|  |  | [kg] | [%] |  |  |  |  |
| – | 3,0 | 3,6 | 100 | 2 | 7,0 | 1,8 | 4 |
| Siliconöl | 1,5 | 3,0 | 83 | 2 | 10,0 | 1,8 | 4 |
| Al-stearat | 2,0 | 4,4 | 122 | 0 | 5,0 | 1,8 | 2 |

Bewertung "Rißbildung: 0 = keine; 1 = gering; 2 = mittel; 3 = stark; 4 = sehr stark

* Prüfkörper: zylindrischer Strang mit $\phi$ = 2,1 mm ± 0,1

\* Beispiele 1 und 2 nicht erfindungsgemäß

EP 0 708 455 B2

**Patentansprüche**

1. Keramisierbare flammwidrige Zusammensetzung, im wesentlichen bestehend aus mindestens einem siliciumorganischen Polymer, das gegebenenfalls freies Siliciumdioxid enthält, mindestens einem keramisierenden Füllstoff, mindestens einem nichtkeramisierenden Füllstoff, freies Siliciumdioxid ausgenommen, in einer Menge des mindestens einen nichtkeramisierenden Füllstoffs von 0-200 Gewichtsteilen pro 100 Gewichtsteile siliciumorganisches Polymer, einem Gehalt an Tensid- Benetzungsmittel für den keramisierenden Füllstoff und einem Vernetzungsmittel, wobei die Füllstoffmenge, ausgenommen die Menge an freiem Siliciumdioxid, 210 bis 500 Gewichtsteile pro 100 Gewichtsteile siliciumorganisches Polymer beträgt und wobei die Menge an keramisierendem Füllstoff mindestens 50 Gewichtsteile pro 100 Gewichtsteile siliciumorganisches Polymer beträgt.

2. Zusammensetzung nach Anspruch 1, **dadurch gekennzeichnet, daß** der Anteil an keramisierendem Füllstoff in der Zusammensetzung wenigstens 100 Gewichtsteile pro 100 Gewichtsteile siliciumorganisches Polymer beträgt.

3. Zusammensetzung nach Anspruch 1 oder 2, **dadurch gekennzeichnet, daß** der keramisierende Füllstoff ein Oxid, vorzugsweise Aluminiumoxid ($Al_2O_3$), ist.

4. Zusammensetzung nach einem der Ansprüche 1 bis 3, **dadurch gekennzeichnet, daß** das Benetzungsmittel eine Metallseife, vorzugsweise eine Aluminiumseife ist.

5. Zusammensetzung nach irgendeinem der Ansprüche 1 bis 4,
**dadurch gekennzeichnet, daß** sie weiter ein oder mehrere Hilfs- und/oder Zusatzstoffe umfaßt.

6. Zusammensetzung nach irgendeinem der Ansprüche 1 bis 5
**dadurch gekennzeichnet, daß** der nichtkeramisierende Füllstoff ein Carbonat, insbesondere $CaCO_3$ und/oder $MgCO_3$ ist.

7. Zusammensetzung nach irgendeinem der Ansprüche 1 bis 6,
**dadurch gekennzeichnet, daß** das Vernetzungsmittel ein organisches Peroxid ist.

8. Zusammensetzung nach irgendeinem der Ansprüche 1 bis 7, **dadurch gekennzeichnet, daß** sie weiter einen mineralischen Werkstoff, insbesondere mineralische Fasern, beispielsweise Silikat-, Glas- oder Keramikfasern, umfaßt

9. Verwendung einer Zusammensetzung nach irgendeinem der Ansprüche 1 bis 8 zur Herstellung von flammwidrigen Isoliermaterialien, insbesondere in Brandsicherheitskabeln.

10. Elektrische Ader (5) oder elektrisches Kabel (10) mit Isolations- und/oder Funktionserhalt, enthaltend wenigstens einen Bestandteil auf Basis einer keramisierbaren Zusammensetzung nach einem der Ansprüche 1 bis 8, insbesondere Trennschichten (2, 26), Mäntel (16, 31), gemeinsame Aderumhüllungen oder Zwickel (15, 28), Iso-Isolationen (3, 27) und/oder Beiläufe (32).

11. Ader (5) oder Kabel (10) nach Anspruch 10, worin der Bestandteil auf Basis der keramisierbaren Zusammensetzung in der Ader (5) oder dem Kabel (10) in Kombination mit einer Ader- oder Kabelkomponente aus Siliconkautschuk vorliegt.

12. Ader (5) oder Kabel (10) nach Anspruch 10, worin der Bestandteil auf Basis der keramisierbaren Zusammensetzung in der Ader (5) oder dem Kabel (10) einen mineralischen Werkstoff enthält und insbesondere als Faserverbundstoff vorliegt.

13. Ader (5) oder Kabel (10) nach Anspruch 10, worin der Bestandteil auf Basis der keramisierbaren Zusammensetzung in der Ader oder dem Kabel eine auf den elektrischen Leiter aufgebrachte Trennschicht (2, 26) ist.

14. Ader (5) oder Kabel (10) nach Anspruch 13, worin auf die Trennschicht (2, 26) eine Isolationsschicht (3, 27) aus Siliconkautschuk oder EPDM-Kautschuk aufgebracht ist.

## Claims

1. Ceramisable flame-resistant composition essentially comprised of at least one organosilicon polymer optionally comprising free silicon dioxide, at least one ceramising filler, at least one non-ceramising filler, excluding free silicon dioxide, in an amount of said at least one non-ceramising filler of 0-200 parts by weight per 100 parts by weight of organosilicon polymer, a content of surfactant wetting agent for the ceramising filler and a cross-linking agent, the amount of filler, excluding free silicon dioxide, being 210 to 500 parts by weight per 100 parts by weight of organosilicon polymer and the amount of ceramising filler being at least 50 parts by weight per 100 parts by weight of organosilicon polymer.

2. Composition according to claim 1, **characterised in that** the proportion of ceramising filler in the composition is at least 100 parts by weight per 100 parts by weight of organosilicon polymer.

3. Composition according to claim 1 or 2, **characterised in that** the ceramising filler is an oxide, preferably aluminium oxide ($Al_2O_3$).

4. Composition according to any one of claims 1 to 3, **characterised in that** the wetting agent is a metal soap preferably an aluminium soap.

5. Composition according to any one of claims 1 to 4, **characterised in that** it further comprises one or more auxiliaries and/or additives, particularly additional non-ceramising fillers and cross-linking agents.

6. Composition according to any of claims 1 to 5, **characterised in that** the non-ceramising filler is a carbonate, particularly $CaCO_3$ and/or $MgCO_3$.

7. Composition according to any of claims 1 to 6, **characterised in that** the cross-linking agent is an organic peroxide.

8. composition according to any one of claims 1 to 7, **characterised in that** it further comprises a mineral material, particularly mineral fibres, for example silicate, glass or ceramic fibres.

9. Use of composition according to any one of claims 1 to 8 for manufacturing flame-resistant insulating materials, particularly in fire-proof cables.

10. Electrical wire (5) or electrical cable (10) with insulating and/or functional properties, containing at least one constituent based on a ceramisable composition according to one of claims 1 to 8, particularly separating layers (2,26), sheaths (16,31), common wire covers or windings (15,31), insulation (3,27) and/or accessories (32).

11. Wire (5) or cable (10) according to claim 10, wherein the constituent based on the ceramisable composition in the wire (5) or the cable (10) is present in combination with a wire or cable component of silicone rubber.

12. Wire (5) or cable (10) according to claim 10, wherein the constituent based on the ceramisable composition in the wire (5) or the cable (10) contains a mineral material and is present particularly as a fibre composite.

13. Wire (5) or cable (10) according to claim 10, wherein the constituent based on the ceramisable composition in the wire (5) or cable (10) is a separating layer (2,26) applied to the electrical conductor.

14. Wire (5) or cable (10) according to claim 13, wherein an insulating layer (3,27) of silicone rubber or EPDM rubber is applied to the separating layer (2,26).

## Revendications

1. Composition ignifuge pouvant être céramisée, essentiellement composé d'au moins un polymère organo-silicique le cas échéant contenant du dioxyde de silicium libre, d'au moins une charge pouvant être céramisée, d'au moins une charge qui ne peut pas être céramisée, à part de dioxyde de silicium libre, en une quantité de cette au moins une charge, qui ne peut pas être céramisée, de 0-200 parties en poids pour 100 parties en poids de polymère organo-silicique, d'une portion d'agent de mouillage tensioactif pour la charge pouvant être céramisée et d'un agent de réticulation, la quantité de la charge, à part de la quantité du dioxyde de silicium libre, étant de 210 à 500 parties en poids pour 100 parties en poids de polymère organo-silicique et la quantité de la charge pouvant être céramisée étant égal à au moins 50 parties en poids pour 100 parties en poids de polymère organo-silicique.

**2.** Composition selon la revendication 1, **caractérisée en ce que** le pourcentage de la charge pouvant être céramisée dans la composition est égal à au moins 100 parties en poids pour 100 parties en poids de polymère organosilicique.

**3.** Composition selon la revendication 1 ou 2, **caractérisée en ce que** la charge pouvant être céramisée est un oxyde, de préférence de l'oxyde d'aluminium ($Al_2O_3$).

**4.** Composition selon l'une quelconque des revendications 1 à 3, **caractérisée en ce que** l'agent de mouillage est un savon métallique, de préférence un savon d'aluminium.

**5.** Composition selon l'une quelconque de revendications 1 à 4, **caractérisée en ce qu'**elle comprend de plus une ou plusieurs substances auxiliaires et/ou additionnelles, notamment des charges supplémentaires qui ne peuvent pas être céramisées et des agents de réticulation.

**6.** Composition selon l'une qelconque de revendications 1 à 5, **caractérisée en ce que** la charge qui ne peut pas être céramisée est un carbonate, notamment du $CaCO_3$ et/ou du $MgCO_3$.

**7.** Composition selon l'une qelconque de revendications 1 à 6, **caractérisée en ce que** l'agent de réticulation est un peroxyde organique.

**8.** Composition selon l'une quelconque de revendications 1 à 7, **caractérisée en ce qu'**elle contient de plus une substance minérale, notamment de fibres minérales, par exemple de fibres de silicate, des fibres de verre ou des fibres céramiques.

**9.** Utilisation d'une composition selon l'une quelconque des revendications 1 à 8 pour fabriquer des matériaux isolants ignifuges, notamment dans des câbles protégés contre le feu.

**10.** Conducteur électrique (5) ou câble électrique (10) comportant un élément conservant l'isolation et/ou le fonctionnement, contenant au moins un constituant basé sur une composition pouvant être céramisée selon une des revendications 1 à 8, notamment des couches de séparation (2,26), des gaines (16,31), des enveloppes communes de conducteurs ou des éléments de bourrage (15,31), des éléments d'isolation (3,27) et/ou des éléments de remplissage (32).

**11.** Conducteur (5) ou câble (10) selon la revendication 10, dans lequel le constituant basé sur la composition pouvant être céramisée est présent dans la conducteur (5) ou dans la câble (10) en combinaison avec un composant en caoutchouc silicone du conducteur ou du câble.

**12.** Conducteur(5) ou câble (10) selon la revendication 10, dans laquel le constituant basé sur la composition pouvant être céramisée dans le conducteur (5) ou le càble (10) contient un matériau minéral et est présent notamment sous la forme d'un matériau composite renforcé par des fibres.

**13.** Conducteur (5) ou càble (10) selon la revendication 10, dans lequel le constituant basé sur la composition pouvant être céramisée dans le conducteur (5) ou le câble (10) est une couche de séparation (2,26) pouvant être déposée sur le conducteur électrique.

**14.** Conducteur (5) ou câble (10) selon la revendication 13, dans lequel une couche isolante (3,27) en caoutchouc silicone ou en caoutchouc EPDM est déposée sur la couche de séparation (2,26).

# FIG. 1

FIG. 2

FIG. 3